(19) **Europäisches Patentamt**

**European Patent Office**

**Office européen des brevets**

(11) Veröffentlichungsnummer: **0 300 959 B1**

(12) **EUROPÄISCHE PATENTSCHRIFT**

(45) Veröffentlichungstag der Patentschrift:
25.09.91 Patentblatt 91/39

(51) Int. Cl.⁵: **B23B 25/06, B23B 5/06, B23B 39/14**

(21) Anmeldenummer: **88810432.0**

(22) Anmeldetag: **23.06.88**

(30) Priorität: **21.07.87 CH 2770/87**

(43) Veröffentlichungstag der Anmeldung:
**25.01.89 Patentblatt 89/04**

(45) Bekanntmachung des Hinweises auf die
Patenterteilung:
**25.09.91 Patentblatt 91/39**

(84) Benannte Vertragsstaaten:
**AT BE CH DE ES FR GB GR IT LI LU NL SE**

(56) Entgegenhaltungen:
**AT-B- 279 306**
**FR-A- 2 555 083**
**US-A- 3 838 521**
**US-A- 4 365 917**

(54) **Verfahren und Vorrichtung zum Zentrieren eines Führungsdorns.**

(73) Patentinhaber: **MINELLI AG**
**Mattenstrasse 3**
**CH-8330 Pfäffikon (CH)**

(72) Erfinder: **Minelli, Italo**
**Mattenstrasse 3**
**CH-8330 Pfäffikon (CH)**

(74) Vertreter: **Amsler, Martin et al**
**c/o FELBER & PARTNER AG, Dufourstr. 116**
**CH-8008 Zürich (CH)**

## Beschreibung

Beim Bearbeiten von Ventilsitzen, insbesondere an Verbrennungsmotoren, ist höchste Präzision des Ventilsitzes gefordert. Die Ventilsitze werden durch Abdrehen bearbeitet, wobei der als Drehstahl dienende Formstahl auf einem Piloten geführt ist, welcher als Führungsdorn in der Ventilführung des zum bearbeitenden Ventilsitz gehörenden Ventils dient. Der durch diese Bearbeitung erzielte Passsitz des Ventils hängt direkt vom Passsitz beziehungsweise der Lage des Piloten in der Ventilführung ab. Auch bei annähernd perfektem Passsitz des Piloten ist es unvermeidlich, dass dieser in der Ventilführung etwas Spiel, wenn auch nur wenig, aufweist. Besonders ist das dann der Fall, wenn die Ventilführung etwas ausgeschlagen ist und sie daher gegen ihre Enden hin im Durchmesser aufgeweitet ist. Die vorliegende Erfindung betrifft ein Verfahren und eine Vorrichtung, mittels denen ein solcher Pilot in einer Ventilführung optimal zentrierbar ist, sodass allfällig vorhandenes Spiel des Piloten in der Ventilführung ausgemittelt wird.

Herkömmlich werden Ventilsitze mit Geräten bearbeitet, welche einen Lagerbock aufweisen, der auf einen Magnetflansch montiert ist. Der Magnetflansch hat eine plane Auflagefläche, mit welcher er auf eine Spannplatte aufsetzbar und dort durch magnetische Kräfte unverrückbar fixierbar ist. Der Lagerbock besteht aus einer Lagersäule, an welcher ein Schwenkarm höhenverstellbar angeordnet ist. Der Schwenkarm trägt an seinem Ende eine Halterung für eine Schwenkkugel, in der ein als Führungsdorn zu wirken bestimmter Pilot steckt. Der Pilot ist dadurch relativ zum Lagerbock auf alle Seiten schwenkbar und mittels der Halterung in jeder beliebigen Schwenklage feststellbar, welche hierzu mit einer Klemmvorrichtung versehen ist. Auf dem Pilot ist sodann ein Formstahl als Drehstahl gelagert. Das Drehen des Drehstahls kann von Hand aber auch mit Hilfe von mechanischen, pneumatischen, hydraulischen oder elektrischen Antriebsmitteln geschehen. Das Gerät wird nun nach einem Verfahren benützt, bei welchem der Pilot in gelöstem Zustand der Schwenkkugel in die Ventilführung hineingeschoben wird. Hierbei wird ein möglichst knapp sitzender Pilot verwendet, welcher möglichst wenig Spiel in der Ventilführung aufweisen soll. Nach Einsetzen des Piloten wird die Schwenkkugel in ihrer Halterung festgeklemmt und sodann wird der Lagerbock durch Einschalten des Magnetfeldes des Magnetflansches auf der Spannplatte unverrückbar befestigt. Mit dem drehenden Formstahl wird nun sachte auf den Ventilsitz hinuntergefahren und soviel Material abgedreht, bis der Formstahl gleichmässig streift. Es versteht sich, dass der Pilot bei diesem Verfahren unvermeidlich ein gewisses Spiel in der Ventilführung aufweist, innerhalb dessen er bezüglich seiner exakten Mittellage eine gewisse Ungenauigkeit aufweist. Wenn nun die Ventilführung zusätzlich ausgeschlagen ist, erhöht sich dieses Spiel. Auch wenn es sich nur um Bruchteile von Winkelgraden handelt, so wirkt sich doch eine derartige Ungenauigkeit der Lage des Piloten, welcher ja als Führung für den Drehstahl dienen soll, beträchtlich auf den späteren Passsitz des Ventils in dem bearbeiteten Ventilsitz aus. Als Abhilfe sind gewisse Geräte mit einem luftgelagerten Magnetflansch ausgerüstet, sodass beim Einführen des Piloten die Reibungskräfte zwischen Magnetflansch und Spannplatte minimiert werden. Der auf einem Luftkissen schwebende Magnetflansch ermöglicht es, dass der Pilot in der Ventilführung eine möglichst spannungsfreie Lage einnehmen kann. Erst wenn sich der Magnetflansch auf der Spannplatte nicht mehr verschiebt, wird er durch Einschalten des Magnetfeldes auf der Spannplatte befestigt. Auch mit diesem Gerät ist jedoch ein gewisses Spiel des Piloten in der Ventilführung unvermeidlich, dies besonders dann, wenn die Ventilführung noch ausgeschlagen ist. Eine optimale Zentrierung des Piloten ist daher mit den herkömmlichen Bearbeitungsgeräten und den mit ihnen applizierten Verfahren nicht erzielbar.

Es ist deshalb die Aufgabe der vorliegenden Erfindung, ein Verfahren und eine Vorrichtung zu schaffen, mittels denen ein als Führungsdorn in einer Ventilführung dienender Pilot optimal zentrierbar ist. Durch die exaktere Zentrierung soll die Präzision des mittels des am Piloten geführten Form-Drehstahls bearbeiteten Ventilsitzes erhöht werden.

Die Aufgabe wird gelöst von einem Verfahren nach dem Oberbegriff des Patentanspruches 1, das sich durch die kennzeichnenden Verfahrensschritte a) bis d) dieses Patentanspruches 1 auszeichnet und ferner durch eine Vorrichtung zur Ausübung des Verfahrens nach Anspruch 1, das sich durch die kennzeichnenden Merkmale des Patentanspruches 6 auszeichnet.

In den Zeichnungen ist eine beispielsweise erfindungsgemässe Vorrichtung in verschiedenen Ansichten dargestellt.

Es zeigt :

Figur 1 : Eine Gesamtansicht der Vorrichtung in Gebrauchslage.
Figur 2 : Einen Aufriss der Antriebsmittel für die Verschiebungen zum Zentrieren.
Figur 3 : Eine Inkrementierscheibe.
Figur 4 : Einen Grundriss der Antriebsmittel für die Verschiebungen zum Zentrieren.
Figur 5 : Eine schematische Darstellung des Piloten mit Spiel in der Ventilführung.

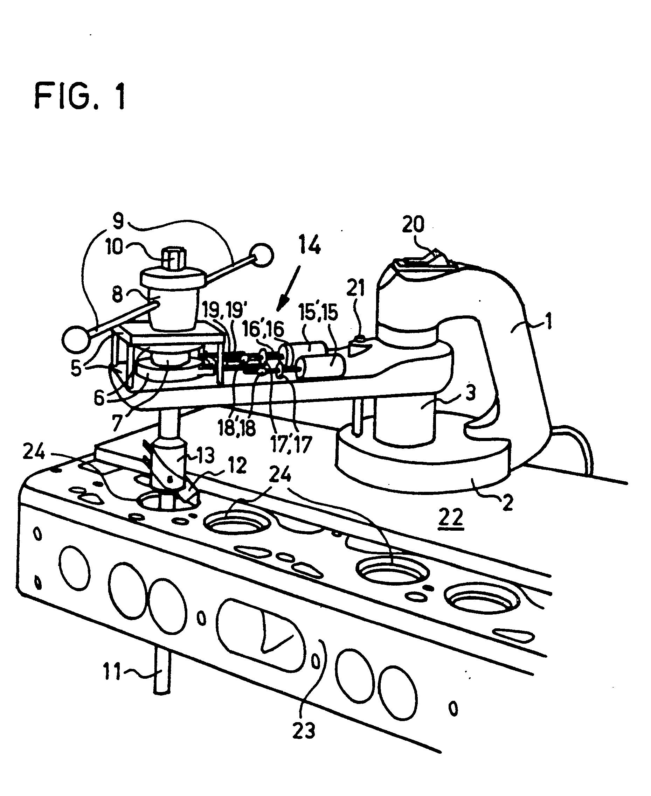

In Figur 1 ist eine Vorrichtung für die Ausführung des erfindungsgemässen Verfahrens gezeigt. Sie besteht aus einem Lagerbock 1 mit einer Lagersäule 3, welche beide auf einen Magnetflansch 2 montiert sind. Der Magnetflansch 2 ist unten pian und in Gebrauchslage der Vorrichtung auf eine Spannplatte 22 aufgesetzt, auf welcher er bei ausgeschaltetem Magneten leicht verschiebbar ist. Der zum Magnetflansch 2 gehörige Elektromagnet ist über den Kippschalter 20 ein- und ausschaltbar. An der Lagersäule 3 ist ein Schwenkarm 4 angelenkt. Mit der Höhenverstellschraube 21 lässt er sich an der Lagersäule in der Höhe verstellen. Durch das Ende des Schwenkarmes 4 ist der Pilot 11 geführt. Er weist ein Drehstahlfutter 13 auf, in das verschiedene Form-Drehstähle 12 einsetzbar sind, mit welchen die Ventilsitze bearbeitet werden. Der Zylinderkopf 23 mit den zu bearbeitenden Ventilsitzen ist hier kopfüber unter der Spannplatte 22 verklemmt. Der Pilot 11, welcher ja als Führungsdorn für den Form-Drehstahl 12 dienen soll, ist hier in die Ventilführung 25 des zu bearbeitenden Ventilsitzes 24 eingesetzt. Was nun wesentlich für die Erfindung ist, ist die Verbindung des Dorns 11 mit dem Schwenkarm 4. Wie bei einer herkömmlichen Vorrichtung ist der Dorn 11 drehbar in einer Schwenkkugel 7 gelagert. Diese ist nun jedoch nicht bloss allseitig schwenkbar gelagert wie bei herkömmlichen Vorrichtungen, sondern zusätzlich auch horizontal allseitig relativ verschiebbar zum Schwenkarm 4. Diese Verschiebbarkeit ist gegeben durch zwei Klemmschalen 6, zwischen welchen die Schwenkkugel 7 schwenkbar gelagert ist, wobei nun aber die Klemmschalen 6 ihrerseits zwischen zwei Klemmplatten 5 verschiebbar gelagert sind. Die untere Klemmplatte 5 ist hierbei durch den Schwenkarm 4 gebildet. Es versteht sich, dass der Dorn 11 durch eine entsprechend grosse Bohrung durch die Schwenkplatte 4 geführt ist. Die Grösse dieser Bohrung bestimmt den Verschiebe- bzw. auch den Schwenkbereich des Dorns 11 bzw. der Schwenkkugel 7. Gleiches gilt auch für eine entsprechende Bohrung in der oberen Klemmplatte 5. In jeder beliebigen Verschiebe- und Schwenklage des Dorns 11 ist dieser unverrückbar feststellbar. Diese Feststellung erfolgt durch eine Verklemmung der beiden Klemmplatten 5 gegeneinander. Diese Verklemmung wird durch Verdrehen einer Spannschraube 8 erzielt, wofür die Spannhebel 9 dienen. Durch die Verklemmung der Klemmplatten 5 gegeneinander werden mittelbar auch die Klemmschalen 6 mit der dazwischenliegenden Schwenkkugel 7 gegeneinander verklemmt. Die gesamte Lagerung der Schwenkkugel 7 mit dem in ihr steckenden Dorn 11 erfolgt auf Luft. Hierzu wird durch kleine Oeffnungen an den inneren und äusseren Klemmflächen der beiden Klemmschaien 6 durch innere Zufuhrkanäle Luft ausgeblasen. Diese Luft bildet dann einerseits zwischen den Klemmflächen von Klemmplatten 5 und Klemmschalen 6 sowie zwischen jenen der Klemmschalen 6 und der Schwenkkugel 7 je ein Luftkissen. Durch die Luftlagerung wird erreicht, dass die Schwenkkugel 7 mit dem von ihr getragenen Dorn 11 praktisch reibungsfrei in ihrem ganzen Verschiebe- und Schwenkbereich bewegbar ist. Für die Dreharbeit wird der festgestellte Dorn über die Drehmutter 10 in Drehung versetzt. Hierzu können hydraulische, mechanische, pneumatische oder elektrische Antriebsmittel dienen. Die Klemmschalen 6 sind nun mittels speziellen Antriebsmitteln 14 in ihrem Verschiebebereich bewegbar. Diese Antriebsmittel 14 bewegen die Klemmschalen um zwei verschiedene, senkrecht zur Verschiebeebene angeordnete Schwenkachsen 30, 31. Die dadurch ermöglichten Verschieberichtungen kreuzen sich also. Die Schwenkachsen 30, 31 sind über Schubstangen 19 gelenkig mit je einer Gewindekugel 18 verbunden. In den Gewindekugeln 18 laufen die mit einem Gewinde versehenen Abtriebsachsen 16 von zwei Elektromotoren 15. Die Abtriebsachsen 16 sind ausserdem mit Inkrementierscheiben 17, 17' versehen, deren Bedeutung und Funktion später noch genauer erläutert wird.

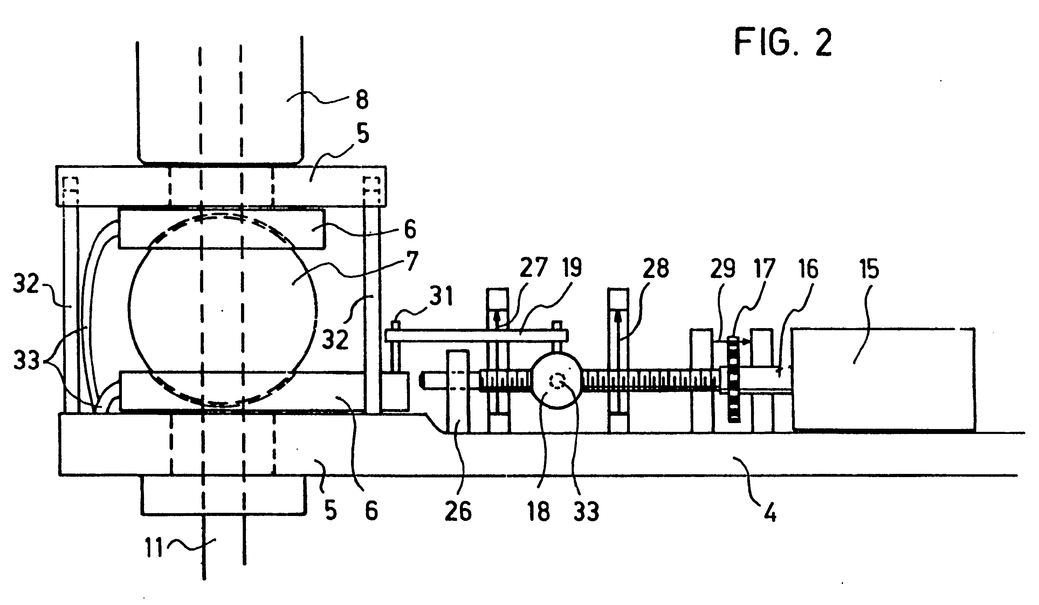

Figur 2 zeigt nun die Antriebsmittei 14 in einer vergrösserten Darstellung im Aufriss. Auf dem Schwenkarm 4, welcher mit seinem Ende als Klemmplatte 5 wirkt, liegt die untere Klemmschale 6 auf. In sie eingesetzt ist die Schwenkkugel 7, in welcher der Dorn 11 drehbar gelagert ist. Die obere Klemmschale 6 ist auf die Schwenkkugel 7 aufgesetzt. Auf die obere Klemmschale 6 ist die obere Klemmplatte 5 aufgesetzt, die zusätzlich auf den Führungsstützen 32 geführt ist. Von oben greift die mit einem Innengewinde versehene Spannmutter 8 an, mittels welcher der Dorn 11 unverrückbar verklemmbar ist, indem die Schwenkkugel 7 in ihrer jeweiligen Lage zwischen den Klemmschalen 6 und Klemmplatten 5 unter Zugspannung setzbar ist. Die Klemmschalen 6 werden für die Luftlagerung über die Schläuche 33 mit Luft versorgt. Die untere Klemmschale 6 ist über die relativ zum Schwenkarm 4 verschiebbare Schwenkachse 31 und weiter über eine Schubstange 19 gelenkig mit der Gewindekugel 18 verbunden. Diese läuft über das Gewinde der Abtriebsachse 16 eines Elektromotors 15. Die Abtriebsachse 16 ist mit ihrem Ende in einem Abtriebswellen-Lager 26 gelagert. Mit der Gewindekugel 18 verschiebt sich auch ein an ihr horizontal abstehender Nocken 33. Der Verschiebebereich der Gewindekugel 18 wird begrenzt von zwei End- Lichtschrauben 27 und 28, deren Unterbrechung durch den Nocken 33 entsprechende Steuersignale auslöst. Der Drehbereich der Abtriebsachse 16 ist mittels der Inkrementierscheibe 17 messbar, welche bei Drehung eine Zähl-Lichtschranke fortlaufend unterbricht und wieder freigibt, wodurch Zählimpulse entstehen, die von der nicht eingezeichneten Steuereinheit registriert werden.

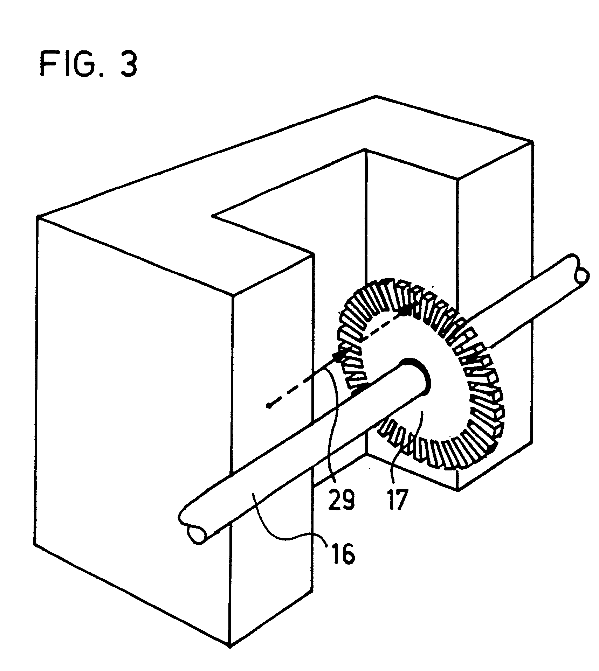

Figur 3 zeigt diese Inkrementierscheibe 17 in einer Vergrösserung. Sie dreht mit der Abtriebsachse 16 mit. Ihr Rand ist mit Schlitzen in regelmässigem Abstand unterbrochen. Diese Schlitze durchlaufen den Lichtstrahl 29 und dabei wird dieser laufend unterbrochen und wieder freigegeben. Anstelle eines regelmässig geschlitzten oder gezahnten Randes kann die Inkrementierscheibe 17 auch in einem konstanten Radiusabstand von der Achse perforiert sein. Der Lichtstrahl induziert einen photoelektrischen Prozess durch dessen laufende Unterbrechung Signalpulse erzeugt werden, die von der elektronischen Steuereinheit zählbar sind.

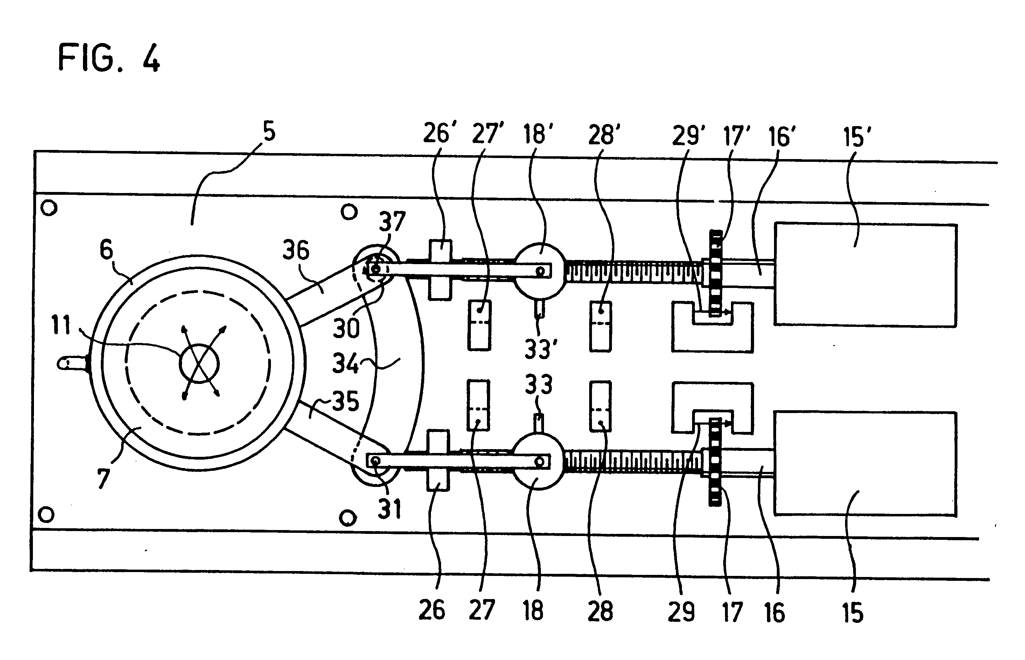

Figur 4 zeigt die Antriebsmittel 14 im Grundriss. Die hier im wesentlichen sichtbaren Teile wurden oben unter Figur 2 mit Ausnahme der genauen Anordnung der Schwenkachsen 30, 31 schon im einzelnen beschrieben. In der vorliegenden Figur 4 sind auch die Nocken 33 an der Gewindekugel 18 deutlicher ersichtlich. Diese Nocken 33 unterbrechen bei genügend grosser Verschiebung auf beiden Seiten die dort jeweils angeordneten Lichtschranken 27 und 28. Die untere Klemmschale 6 ist um zwei verschiedene Schwenkachsen 30 und 31 schwenkbar. Die Schwenkachse 30 ist fest mit der unteren Klemmplatte 5 beziehungsweise dem Schwenkarm 4 verbunden. Um sie schwenkbar ist der Schwenkbügel 34 angeordnet, der seinerseits mit seinem anderen Ende gelenkig mit der Schubstange 19 und dem Schwenkhebel 35 verbunden ist, durch welches Gelenk die zweite Schwenkachse 31 gebildet ist. Der Schwenkhebel 35 ist fest mit der Klemmschale 6 verbunden. Ein zweiter, ebenfalls fest mit der Klemmschale 6 verbundener Schwenkhebel 36 ist durch ein Gelenk 37 schwenkbar mit der anderen Schubstange 19' verbunden, jedoch unabhängig von der darunter liegenden, bereits beschriebenen Schwenkachse 30. Die beiden Pfeile deuten ungefähr die beiden Verschieberichtungen an, welche um die beiden Schwenkachsen 30 und 31 möglich sind.

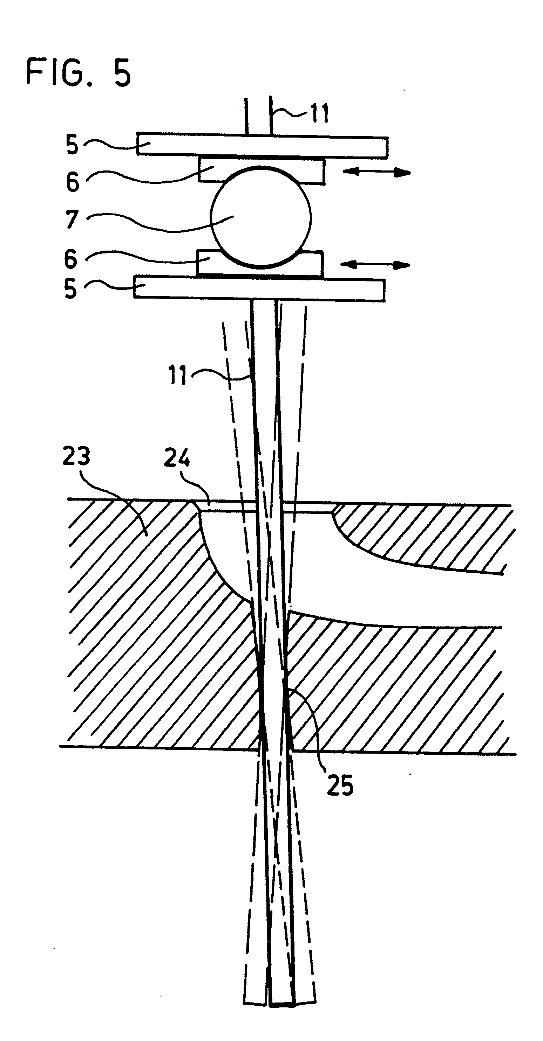

In der Figur 5 ist schematisch dargestellt, wie ein in die Ventilführung 25 eingesetzter Pilot 11 in jener Spiel hat. Dieses Spiel rührt einerseits von der stets mit einem Fehler behafteten Passgenauigkeit des Piloten 11 her, andrerseits jedoch auch von der Ausgeschlagenheit der Ventilführung 25. Natürlich ist das hier dargestellte Spiel in seinen Dimensionen stark übertrieben gezeichnet, um das der Erfindung zugrundeliegende Problem klarer zu zeigen. Innerhalb des Spiels des Piloten 11, das bei einem erfindungsgemässen Gerät bewusst nicht zu knapp gewählt wird, kann nun der Pilot 11 über zwei sich kreuzende Richtungen ausgemittet werden. Dadurch wird auch ein allfälliger Fehler der Lage der Drehebene, welche der zu bearbeitende Formdrehstahl beschreibt, ausgemittelt. Das erfindungsgemässe Bearbeitungsverfahren geht mit der beschriebenen Vorrichtung wie folgt vonstatten :

Nachdem der Zylinderkopf 23 mit den zu bearbeitenden Ventilsitzen 24 so eingespannt ist, dass die Ventilsitze 24 gegen oben gerichtet sind, wird die Spannplatte 22 aufgesetzt und mit dem Zylinderkopf 23 verspannt. Nun wird die Vorrichtung mit dem Magnetflansch 2 auf die Spannplatte 22 aufgesetzt, wobei aber der Pilot 11 in den freien Raum hinunterragt. Nach dem Befestigen des Magnetflansches 2 mittels Einschalten des entsprechenden Magnetfeldes durch den Kippschalter 20 wird vorerst der Pilot 11 durch den Verfahrensschritt a) grob zentriert. Dazu ist er in seiner Halterung gelöst. Die elektronisch gesteuerten Antriebsmittel 14 verschieben nun die Klemmschale 6 der Halterung nacheinander in zwei sich kreuzenden Richtungen und fahren die Halterung in die jeweiligen Mittellagen. Der Verschiebbereich der Halterung wird mittels je einer Lichtschranke 27, 28 begrenzt. Zuerst fahren die Antriebsmittel 14 die Klemmschale 6 um die Schwenkachse 30 durch eine Hinbewegung in eine erste Endposition, welche durch Ueberfahren der Lichtschranke 27 mit dem Nocken 33 erreicht wird. Die Verschiebevorrichtung wird sodann umgekehrt in eine Herbewegung, wobei der Fahrweg bis zur anderen Endposition des Verschiebebereiches gemessen wird. Das geschieht mit der Inkrementierscheibe 17, welche mit der Abtriebsachse 16 des Elektromotors 15 mitdreht und dadurch laufend die Lichtschranke 29 unterbricht und wieder freigibt. Die dadurch photoelektrisch erzeugten Signalpulse werden von einer elektronischen Steuereinheit gezählt, bis die Verschiebung durch das Ueberfahren der anderen Lichtschranke 28 gestoppt wird. Die Steuereinheit ermittelt nun den halben Fahrweg durch Halbieren der gezählten Signalpulse. Bei ungerader Summe wird auf- oder abgerundet. Die Halterung wird dann durch eine erneute Hinbewegung in die Mittelposition des Schwenkbereiches um die Achse 30 gefahren Die Steuerung erfolgt hierbei wieder mittels der Inkrementierscheibe 17, welche den Fahrweg in Signalpulsen zählbar macht, bis die ermittelte Pulszahl erreicht ist, wonach der Elekromotor 15 gestoppt wird. Der identische Vorgang erfolgt nun mit den gegenüberliegenden Antriebsmitteln um die Schwenkachse 31. Die Halterung ist dadurch schliesslich in der Mittelposition ihres Verschiebebereiches, was sicherstellt, dass später ein festgestelltes Spiel des Piloten 11 in der Ventilführung in jeder Richtung ausgemittelt werden kann.

Für den Verfahrensschritt b) wird die Halterung mit Vorteil verspannt, damit am Piloten auftretende Kräfte nicht auf die feinen Antriebsmittel übertragen werden. Nach dem Ausschalten des Magnetfeldes wird die Vorrichtung von der Spannplatte abgehoben und der Pilot 11 in die Ventilführung 25 des zu bearbeitenden Ventilsitzes 24 eingeführt. Nach dem Lösen der Halterung des Piloten 11 wird das Magnetfeld wieder eingeschaltet, wodurch der Magnetflansch 2 für die Bearbeitung unverrückbar auf der Spannplatte 22 befestigt ist.

Mit dem Verfahrensschritt c) erfolgt nun die Feinzentrierung des Piloten 11 in der Ventilführung 25. Dazu wird die Halterung des Piloten 11 gelöst, sodass sie sich luftgelagert möglichst reibungsfrei bewegen lässt. Die Zentrierung erfolgt identisch wie schon die Grobzentrierung, welche unter zum Verfahrensschritt a) beschrieben wurde. Natürlich ist der Verschiebebereich jetzt nicht durch die Lichtschranken begrenzt, sondern durch die jeweiligen Anschläge des Piloten 11 in der Ventilführung. Die Steuereinheit stoppt entsprechend die Verschiebungen, sobald sie registriert, dass sich die Inkrementierscheiben 17, 17' nicht mehr drehen.

Das Verfahren zum Grob- und Feinzentrieren kann aber auch so ablaufen, dass mit dem Piloten durch entsprechende Verschiebung der Halterung der Rand seines Verschiebebereiches, das heisst seines Spielbereiches, abgefahren wird und diese Bewegungskurve elektronisch gemessen, gespeichert und verrechnet wird. Das Abfahren dieses Randes kann mittels Antriebsmitteln erfolgen, welche längs- und querflexibel mit der Halterung verbunden sind. Die Bewegung, welche ja annähernd kreisförmig, in der Regel ellipsoidisch sein wird, kann zum Beispiel mittels zwei Potentiometern, welche je durch die x- und y-Auslenkung gesteuert werden, durch Ueberlagerung der Messströme ermittelt werden. Es werden dann mit der elektronischen Steuereinheit die Messströme für die errechnete Mittelposition ermittelt, welche beim Zentrieren mit den nämlichen Antriebsmitteln als Kennwerte dienen können.

Schliesslich wird die Halterung des Piloten 11 als Schritt d) mit den Klemmmitteln fest und unverrückbar verspannt. Er kann nun als Führung für den auf ihm sitzenden Form-Drehstahl 12 dienen, mit dem jetzt die Präzisionsbearbeitung des Ventilsitzes 24 vorgenommen werden kann. Mit dem erfindungsgemässen Verfahren lässt sich ein Pilot 11 höchst präzis in einer Ventilführung zentrieren. Die Applikation ist reproduzierbar und es können keine Differenzen in der Genauigkeit mehr festgestellt werden, wie das bisher unvermeidlich der Fall war. Die Erfindung ermöglicht ein bisher unerreicht präzises Bearbeiten von Ventilsitzen.


**Patentansprüche**

1. Verfahren zum Zentrieren eines als Führungsdorn (11) in einer Ventilführung (25) dienenden Piloten (11) zum Zwecke des Präzisionsbearbeitens eines Ventilsitzes (24) mit einer Vorrichtung, welche zur Führung des Form-Drehstahls (12) einen in die Ventilführung (25) einpassenden, in einer Schwenkkugel (7) steckenden Piloten (11) aufweist, der mittels der Schwenkkugel (7), die in einer Halterung an einem Arm (4) der Vorrichtung allseits verschieb- und feststellbar gelagert angeordnet ist, dadurch gekennzeichnet, dass

a) der in der Halterung gelöste Pilot (11) ausserhalb der Ventilführung (24) mittels elektronisch gesteuerter Antriebsmittel (14) über mindestens zwei sich kreuzende Richtungen nacheinander in einem allseitigen horizontalen Verschiebebereich seiner örtlichen Halterung hin- und hergefahren wird, wodurch jeweils der Fahrweg zwischen beiden Endpositionen dieses Verschiebebereiches mittels einer elektronischen Steuereinheit gemessen, gespeichert und verrechnet wird, und dass der Pilot durch Zurückfahren seiner Halterung mittels der durch die Steuereinheit gesteuerten Antriebsmittel (14) nacheinander in die Mittelpositionen der eben vermessenen Verschiebebereiche zurückgefahren wird ;

b) der Pilot (11) in die Ventilführung (25) des zu bearbeitenden Ventilsitzes (24) eingeführt wird, und der Arm der Vorrichtung unverrückbar befestigt wird ;

c) der Pilot mittels der elektronisch gesteuerten Antriebsmittel (14) in seinem Spiel in der Ventilführung (25) feinzentriert wird, indem er über mindestens zwei sich kreuzende Richtungen nacheinander in seinem allseitigen horizontalen Verschiebebereich seiner Halterung, den diese aufgrund seines Spiels in der Ventilführung (25) aufweist, hin- und hergefahren wird, wodurch jeweils der Fahrweg zwischen beiden Endpositionen des jeweiligen Verschiebebereiches der Halterung oder durch Abfahren des Randes des Verschiebebereiches seines Spiels dieser Rand, mittels der elektronischen Steuereinheit gemessen, gespeichert und verrechnet wird, und dass der Pilot (11) durch Zurückfahren seiner Halterung mittels der durch die Steuereinheit gesteuerten Antriebsmittel (14) in die Mittelposition des eben vermessenen Verschiebebereiches zurückgefahren wird ;

d) der Pilot mit Klemmmitteln in seiner Halterung unverrückbar festgeklemmt wird, wonach er für die Präzisionsbearbeitung des Ventilsitzes (24) als Führung für den Form-Drehstahl (12) vorbereitet ist.

2. Verfahren nach Anspruch 1, dadurch gekennzeichnet, dass für den Verfahrensschritt a) der Verschiebebereich der Halterung mittels der Antriebsmittel (14) nacheinander um zwei voneinander verschiedene Schwenkachsen (30, 31) geschwenkt wird, wobei die Schwenkbereiche beidseits durch Ueberfahren je einer Lichtschranke (27, 28) begrenzt werden.

3. Verfahren nach Anspruch 1 oder 2, dadurch gekennzeichnet, dass die Verschiebebereiche der Halterung bei den Verfahrensschritten a) und c) gemessen werden, indem Inkrementierscheiben (17, 17′), die auf den Antriebsachsen (16, 16′) der Antriebsmittel (14) angeordnet sind und mit diesen mitdrehen, in konstantem Radiusabstand rundum mit einer regelmässigen Perforation oder mit einem regelmässig gezahnten Rand versehen sind, je durch eine parallel zu ihrer Drehachse gerichtete Lichtschranke (29) laufen, wodurch die Lichtschranke (29, 29′) entsprechend der Drehung der Inkrementierscheibe (17, 17′) durch die Perforation oder den gezahnten Rand laufend geöffnet und geschlossen wird und die dadurch erzeugten photoelektrischen Pulse durch die elektronische Steuereinheit gezählt werden.

4. Verfahren nach Anspruch 1, 2 und 3, dadurch gekennzeichnet, dass die Steuerung des Verfahrensschrittes a) mittels der elektronischen Steuereinheit derart erfolgt, dass mit den Antriebsmitteln (14) erst der eine Verschiebebereich in einer ersten Richtung abgefahren wird, wozu eine Hinbewegung ausgelöst wird, bis die den Verschiebebereich begrenzende Lichtschranke (27, 27') überfahren wird, dass sodann die Hinbewegung umgekehrt wird in eine Herbewegung, bis die den Verschiebebereich in dieser Richtung begrenzende Lichtschranke (28, 28') überfahren wird, wodurch die Steuereinheit die Herbewegung stoppt, und dass während dieser Herbewegung die photoelektrischen Pulse, welche durch die Drehung der Inkrementierscheibe (17, 17') durch die dortige Lichtschranke (29, 29') erzeugt werden, von der elektronischen Steuereinheit registriert, gezählt und anschliessend halbiert werden, und dass dann von der Steuereinheit eine neuerliche Hinbewegung eingeleitet wird, welche diese stoppt, sobald sie die errechnete halbe Anzahl vorher registrierter Lichtpulse wieder registriert hat, ferner dass anschliessend der identische Vorgang für den zweiten Verschiebebereich gesteuert wird.

5. Verfahren nach Anspruch 1, 2 und 3, dadurch gekennzeichnet, dass die Steuerung des Verfahrensschrittes c) mittels der elektronischen Steuereinheit derart erfolgt, dass mit den Antriebsmitteln (14) erst der eine Verschiebebereich aufgrund des freien Spiels des Piloten (11) in der Ventilführung (25) in einer ersten Richtung abgefahren wird, wozu eine Hinbewegung ausgelöst wird, bis diese Hinbewegung durch den Anschlag des Piloten (11) in der Ventilführung (25) gestoppt wird, dass durch den Stopp der Hinbewegung die Steuereinheit eine Herbewegung einleitet, bis diese Herbewegung durch den Anschlag des Piloten (11) in der Ventilführung (25) gestoppt wird, und dass während dieser Herbewegung die photoelektrischen Pulse, welche durch die Drehung der Inkrementierscheibe (17, 17') durch die dortige Lichtschranke (29, 29') erzeugt werden, von der elektronischen Steuereinheit registriert, gezählt und anschliessend halbiert werden, und dass dann von der Steuereinheit eine neuerliche Hinbewegung eingeleitet wird, welche diese stoppt, sobald sie die errechnete halbe Anzahl vorher registrierter Lichtpulse wieder registriert hat, ferner dass anschliessend der identische Vorgang für den zweiten Verschiebebereich gesteuert wird.

6. Vorrichtung zur Ausführung des Verfahrens nach Anspruch 1, deren Halterung der Schwenkkugel an einem Schwenkarm (4) allseits schwenk- und feststellbar gelagert ist, wobei der Schwenkarm (4) höhenverstellbar an einem Lagerbock (1) mit Lagersäule (3) und Magnetflansch (2) angeordnet ist, welcher Magnetflansch (2) auf einer Spannplatte (22) magnetisch befestigbar ist, dadurch gekennzeichnet, dass die Halterung der Schwenkkugel (7) aus zwei Klemmschalen (6) und zwei Klemmplatten (5) besteht, wobei die Schwenkkugel (7) zwischen den in Abstand voneinander parallel zueinander angeordneten Klemmschalen (6) mit konkaven Klemmflächen dreh- und schwenkbar luftgelagert gehalten ist, und dass die Klemmschalen (6) auf der der Schwenkkugel (7) abgewandten Seite plan sind und gemeinsam zwischen zwei planen Klemmplatten (5) allseits verschiebbar luftgelagert sind, dass die Schwenkkugel (7) mit dem darin drehbar gelagerten Piloten (11) mittels Verspannung der Klemmplatten (5) gegeneinander zwischen den Klemmschalen (6) unverrückbar festklemmbar ist, ferner dass Antriebsmittel (14) vorhanden sind, mittels denen nacheinander die Klemmschalen (6) in gelöstem Zustand in zwei sich kreuzenden Richtungen verschiebbar sind, dass die Antriebsmittel (14) für die Verschiebungen mit Messeinrichtungen (17, 29) versehen sind, mit welchen der Verschiebebereich elektronisch messbar ist, und dass eine elektronische Steuereinheit vorhanden ist, mittels welcher der gemessene Verschiebebereich so verrechenbar ist, dass die Antriebsmittel (14) so steuerbar sind, dass der Pilot (11) exakt in die Mittelposition zwischen den beiden Endpositionen seines Verschiebebereiches in jenen zwei Verschieberichtungen fahrbar und dort feststellbar ist.

7. Vorrichtung nach Anspruch 6, dadurch gekennzeichnet, dass die Antriebsmittel (14) für jede Verschieberichtung aus einem Elektromotor (15, 15') bestehen, dass je dessen Abtriebsachse (16, 16') in einer Gewindekugel (18, 18') gewindegelagert ist, dass diese Gewindekugel (18, 18') über eine Schubstange (19, 19') gelenkig mit mindestens einer der Klemmschalen (6) verbunden ist, dass der Verschiebebereich der Klemmschalen (6) durch zwei Schwenkbereiche der Klemmschalen (6) um zwei voneinander verschiedene Schwenkachsen (30, 31) gegeben ist, wobei die Schwenkachse (31) für den ersten Schwenkbereich durch die Gelenkverbindung (31) der Schubstange (19) der Antriebsmittel (14) für den zweiten Schwenkbereich mit der Klemmschale (6) gebildet ist, während die Schwenkachse (30) für den zweiten Schwenkbereich auf dem Schwenkarm (4) in der Mittellage der Gelenkverbindung (37) zwischen der Schubstange (19') der Antriebsmittel (14) für den ersten Schwenkbereich und der Klemmschale (6) angeordnet ist.

8. Vorrichtung nach Anspruch 6 und 7, dadurch gekennzeichnet, dass die Messeinrichtungen für die Schwenkungen an den Antriebsmitteln (14) für jede Schwenkung einerseits aus zwei Endschaltern für beide Bewegungsrichtungen der Schubstange (19, 19') bestehen und dass weiter an jeder Abtriebsachse (26, 26') ein Drehbereich-Zähler vorhanden ist, mittels dem der Drehbereich elektronisch messbar ist.

9. Vorrichtung nach Anspruch 8, dadurch gekennzeichnet, dass die Endschalter aus je einer bezüglich des Schwenkarms ortsfesten, senkrecht zur Schubstange (19, 19') gerichteten Lichtschranke (27, 27') bestehen, sowie aus einem von der Schubstange (19, 19') oder von der Gewindekugel (18, 18') radial abstehenden Nocken (33, 33'), der beim Ueberfahren der Lichtschranken (27, 27') die durch diese in Gang befindlichen photoelektrischen Effekte unterbricht und dadurch ein Signal schaltet.

6

10. Vorrichtung nach Anspruch 8, dadurch gekennzeichnet, dass der Drehbereich-Zähler an jeder Abtriebsachse (16, 16') aus einer runden, zentrisch auf die Abtriebsachse aufgesetzten Inkrementierscheibe (17, 17') besteht, die in einem konstanten Radiusabstand rundum eine regelmässige Perforation oder einen regelmässig gezahnten Rand aufweist, wodurch die Lichtschranke (29, 29') entsprechend der Drehung der Inkrementierscheibe (17) laufend öffnen- und schliessbar ist.

## Revendications

1. Procédé pour le centrage, au moyen d'un appareil pourvu d'une tige pilote (11) servant de guide pour l'outil de tournage (12), d'une broche porte-outil dans un guide de soupape (25) pour l'usinage de précision d'un siège de soupape (24), ladite tige pilote (11) étant portée par une noix sphérique d'orientation placée dans un support sur un bras orientable (4), caracterisé en ce que

(a) la tige pilote (11) en condition libérée est soumise à des déplacements alternatifs en dehors du guide de soupape (25) dans le plan horizontal, selon au moins deux directions distinctes au moyen d'un mécanisme d'entraînement (14) à contrôle électronique, la distance entre les deux extrémités du champs de déplacement du support étant mesurée, mise en mémoire, et calculée au moyen d'un organe de commande électronique au cours dudit déplacement de la tige pilote (11), après quoi la tige pilote (11) est ramenée dans le point central des champs de déplacement ainsi mesurés par un déplacement de son support au moyen du mécanisme d'entraînement (14) contrôlé par l'organe de commande ;

(b) la tige pilote (11) est introduite dans le guide de la soupape (25) correspondant au siège de soupape (24) à usiner et le bras de l'appareil est immobilisé ;

(c) la tige pilote (11) est soumise à un centrage de précision dans son jeu dans le guide de soupape (25) au moyen du mécanisme d'entraînement (14) contrôlé par l'organe de commande, ledit centrage de précision étant effectué par des déplacements alternatifs dans le jeu de la tige pilote (11) dans du guide de soupape (25) dans le plan horizontal, selon au moins deux directions distinctes au moyen d'un mécanisme d'entraînement (14) à contrôle électronique, la distance entre les deux extrémités du champs de déplacement du support correspondant au jeu de la tige pilote dans le guide de soupape étant mesurée, mise en mémoire, et calculée au moyen d'un organe de commande électronique au cours dudit déplacement de la tige pilote, après quoi la tige pilote (11) est ramenée au milieu des champs de déplacement ainsi mesurés par un déplacement de son attache au moyen du mécanisme d'entraînement (14) contrôlé par l'organe de commande ;

(d) la tige pilote (11) est immobilisée dans son support, pour l'usinage de précision du siège de soupape (24) au moyen de l'outil de tournage (12).

2. Procédé selon la revendication 1, caractérisé en ce que, pour l'étape (a) du procédé, le champs de déplacement du support est pivoté consécutivement sur deux axes distincts (30, 31) au moyen du mécanisme d'entraînement (14), la plage de pivotement étant limitée de chaque côté par un barrage photoélectrique (27, 28, 27', 28').

3. Procédé selon la revendication 1 ou 2, caractérisé en ce que, pour les étapes (a) et (c) du procédé, les champs de déplacement du support sont mesurés au moyen de disques incrémentiels (17, 17'), lesquels sont disposés sur et tournent avec les arbres d'entraînement (16, 16') des moteurs électriques (15, 15') et sont pourvus de perforations régulières à un rayon fixe du centre ou d'un bord denté, lesquelles perforations ou bords dentés interrompent un barrage photoélectrique (29, 29') orienté parallèlement à l'axe des arbres à une fréquence proportionelle à la vitesse de rotation des disques incrémentiels (17, 17'), et ce faisant, produisent des impulsions photoélectriques, lesquelles sont comptées par l'organe de commande.

4. Procédé selon les revendications 1, 2, et 3, caractérisé en ce que, pour l'étape (a) du procédé, l'organe électronique de commande déclenche le mécanisme d'entraînement (14), provoquant un déplacement selon une première direction dans le premier champs de déplacement, ce déplacement s'arrêtant au passage du barrage photoélectrique (27, 27'), et enclenchant un déplacement en sens inverse dans ce premier champs de déplacement jusqu'au passage du barrage photoélectrique (28, 28') indiquant la fin de course pour cette deuxième direction, l'organe de commande arrêtant alors ce deuxième déplacement, au cours duquel les impulsions photoélectriques produites par l'interruption du barrage photoélectrique (29, 29') par le disque incrémentiel (17, 17') sont comptées et divisées par deux, après quoi le mouvement selon la première direction recommence, pour s'arrêter quand l'organe de commande a enregistré la moitié des impulsions photoélectriques enregistrées au deuxième déplacement dans le premier champs de déplacement, et ce procédé étant répété pour le deuxième champs de déplacement.

5. Procédé selon les revendications 1, 2, et 3, caractérisé en ce que, pour l'étapes (c) du procédé, l'organe électronique de commande déclenche le mécanisme d'entraînement (14), provoquant un déplacement selon une première direction dans le premier champs de déplacement défini par le jeu de la tige pilote (11) dans le guide de soupape (25), ce déplacement s'arrêtant quand la tige pilote (11) bute contre le premier bord du guide de soupape (25), et enclenchant un déplacement en sens inverse dans ce premier champs de déplacement jusqu'à ce que la tige pilote (11) bute contre le bord du guide de soupape (25) dans cette deuxième direction, l'organe de commande arrêtant alors ce deuxième déplacement, au cours duquel les impulsions photoélectriques produites par l'interruption du barrage photoélectrique (29, 29') par le disque incrémentiel (17, 17') sont comptées et divisées par deux, après quoi le mouvement selon la première direction recommence, pour s'arrêter quand l'organe de commande a enregistré la moitié des impulsions photoélectriques enregistrées au deuxième déplacement dans le premier champs de déplacement, et ce procédé étant répété pour le deuxième champs de déplacement.

6. Appareil pour l'éxécution du procédé selon la revendication 1, comportant un support pour une noix sphérique (7) pouvant prendre toute position angulaire désirée, ladite noix étant placée sur un bras orientable (4) et réglable en hauteur, ledit bras étant monté sur un support comprenant une colonne et un collet magnétique et pouvant être magnétiquement fixé sur une plaque de fixation (22), caractérisé en ce que, d'une part, le support pour la noix sphérique (7) comporte deux sièges (6) et deux plaques de serrage (5), ladite noix sphérique (7) étant portée par un coussin d'air entre les deux sièges (6) de sphéricité concave complémentaire, la face desdits sièges (6) reposant sur les plaques de serrage (5) étant plans et lesdits sièges (6) étant eux-mêmes portés sur un coussin d'air, ladite noix sphérique (7) tenant la tige pilote (11) pouvant être immobilisée par pression des plaques de serrage (5) sur les sièges (6), d'autre part caractérisé en ce que les sièges (6) en condition libérée peuvent être déplacés selon deux directions distinctes au moyen d'un mécanisme d'entraînement (14), ledit mécanisme d'entraînement (14) étant pourvu d'instruments de mesure (17, 29) permettant une mesure électronique des deux champs de déplacement, et d'un organe de commande permettant un calcul des champs de déplacement, puis un positionnement exact et une immobilisation de la tige pilote (11) au centre des deux champs de déplacement selon les calculs effectués.

7. Appareil selon la revendication 6, caractérisé en ce que le mécanisme d'entraînement (14) pour chaque direction de déplacement comporte un moteur électrique (15, 15') dont l'arbre d'entraînement (16, 16') tourne sur une noix filetée (18, 18'), laquelle noix (18, 18') est reliée de façon articulée à au moins un des sièges (6) par une jambe de force (19, 19'), le champs de déplacement des sièges (6) étant défini par deux plages de pivotement des sièges (6) sur deux axes distincts (30, 31), l'axe de pivotement (31) pour la première plage de pivotement étant formé par une connection articulée de la jambe de force (19) du mécanisme d'entraînement (14) définissant la deuxième plage de pivotement du siège (6), et l'axe de pivotement (30) pour la deuxième plage de pivotement se trouvant sur le bras orientable (4), dans une position centrale de la connection articulée (37) entre la jambe de force (19') du mécanisme d'entraînement (14) pour la première plage de pivotement et le siège (6).

8. Appareil selon les revendications 6 et 7, caractérisé en ce que les organes de mesure de la plage de pivotement pour chaque axe de pivotement comportent deux interrupteurs de fin de course pour chacune des deux orientations des jambes de force (19, 19') et un compteur de rotation monté sur chaque arbre d'entraînement (16, 16').

9. Appareil selon la revendication 8, caractérisé en ce que chacun des interrupteurs de fin de course comporte un barrage photoélectrique (27, 27') fixe par rapport au bras orientable (4) et perpendiculaire à la jambe de force (19, 19'), et une came (33, 33') disposée radialement à une des jambes de force (19, 19') ou à la noix filetée (18, 18') et qui commute un signal en interrompant le barrage photoélectrique (27, 27').

10. Appareil selon la revendication 8, caractérisé en ce que le compteur de rotation sur chaque arbre d'entraînement (16, 16') comporte un disque incrémentiel (17, 17') disposé sur l'arbre d'entraînement (16, 16'), ledit disque incrémentiel étant pourvu de perforations régulières à un rayon fixe du centre ou d'un bord denté, lesquelles perforations ou bords dentés interrompent un barrage photoélectrique (29, 29') orienté parallèlement à l'axe de l'arbres à une fréquence proportionelle à la vitesse de rotation du disque incrémentiel (17, 17').

## Claims

1. Process for centering a pilot shaft (11) serving as a guide mandrel in a valve guide (25), for the precision machining of a valve seat (24) with a device for guiding a rotary shaping tool (12), the device comprising the pilot shaft (11) fitting into the valve guide (25) and passing through a swiveling ball (7), whereby the pilot shaft (11), by means of the swiveling ball (7) is positioned and supported so as to be displaceable and fixable on all sides in a support mounting on an arm (4) of the device, which process comprises the steps :

   (a) displacing the pilot shaft (11) back and forth successively through at least two crossing directions outside the valve guide (25) by means of an electronically controlled drive mechanism (14), measuring, storing, and calculating the motion path between both end positions of a horizontal displacement range of the support mounting by means of an electronic control unit, and moving the pilot shaft (11) into a central position within the calculated displacement ranges by moving the support mounting of the pilot shaft (11) by means of the drive mechanism (14) which is controlled by the control unit ;

(b) inserting the pilot shaft (11) into the valve guide (25) of the valve seat (24) to be machined, and firmly fixing the arm (4) of the device with respect to the valve seat (24) ;

(c) precision-centering the pilot shaft (11) within its clearance in the valve guide (25), by moving it back and forth successively through at least two crossing directions in an overall horizontal displacement range of the support mounting by means of the electronically controlled drive mechanism (14), the pilot shaft (11) moving within the clearance in the valve guide (25), measuring, storing, and calculating the motion path between both end positions of each displacement range of the support mounting by means of the electronic control unit, and finally moving the pilot shaft (11) back into the central position of the thus measured displacement range by moving its support mounting by means of the drive mechanism (14) which is controlled by the control unit ;

(d) fixing the pilot (11) in its support mounting, thus readying it as a guide for the rotary shaping tool (12), for the precision machining of the valve seat (24).

2. Process according to claim 1, wherein, for process step (a), the axis of the support mounting, and thus of the two displacement ranges, is swiveled successively about two distinct axes (30, 31) by means of the drive mechanism (14), the swiveling ranges of the support mounting being bounded on both ends by light barriers (27, 28, 27', 28').

3. Process according to claims 1 or 2, wherein, for process steps (a) and (c), the displacement ranges of the support mounting are measured by incremental disks (17, 17'), which are concentrically mounted on and rotate with the drive shafts (16, 16') of the electric motors (15, 15'), each of the two incremental disks (17, 17') having regular perforations at a given radius from its center or notches in regular intervals on its circumference, which perforations or notches open and close a light barrier (29, 29'), whose beam is oriented parallel to the rotational axis of the incremental disks (17, 17'), at a frequency proportional to the rotation speed of the incremental disk (17, 17'), thus producing photoelectrical pulses which are counted by the electronic control unit.

4. Process according to claims 1, 2, and 3, wherein the control of process step (a) is performed by means of the electronic control unit directing the drive mechanism (14), starting by a movement in a first direction in the first displacement range until the first set of light barriers (27, 27'), limiting the first displacement range, are crossed, whereupon the motion is reversed and the first displacement range is traversed in the opposite direction, until the second set of light barriers (28, 28'), limiting the first displacement range in this second direction, are crossed, whereupon the control unit stops this second movement, during which the photoelectric pulses are counted and halved by the electronic control unit, and after which a new movement in the first direction is initiated, which movement stops when the control unit has registered half the number of previously registered photoelectric pulses, and following which the identical process is carried out for the second displacement range.

5. Process according to claims 1, 2, and 3, wherein the control of process step (a) is performed by means of the electronic control unit directing the drive mechanism (14), starting by a movement in a first direction in the first displacement range defined by the clearance of the pilot shaft (11) within the valve guide (25) until the pilot shaft (11) contacts and is blocked in the valve guide (25), whereupon the motion is reversed and the first displacement range is traversed in the opposite direction, until the pilot shaft (11) contacts and is blocked in the valve guide (25) in this second direction, whereupon the control unit stops this second movement, during which the photoelectric pulses are counted and halved by the electronic control unit, and after which a new movement in the first direction is initiated, which movement stops when the control unit has registered half the number of previously registered photoelectric pulses, and following which the identical process is carried out for the second displacement range.

6. Device for implementing the process according to claim 1, comprising a support mounting for a swiveling ball (7) which is adjustable in all directions and which is seated on a swiveling, height-adjustable arm (4), which arm (4) is mounted on a support stand (1) having a support column (3) and a magnetic flange (2) which can be magnetically attached to a clamping plate (22), characterized in that the swiveling ball (7), which can be rotated in all directions, is seated on an air cushion between two parallel, concave clamping shells (6) and two clamping plates (5), the clamping shells (6) being flat on the side turned outward from the swiveling ball (7) and supported on an air cushion between the two clamping plates (5), and further characterized in that the swiveling ball (7) with the pilot shaft (11) positioned rotatably within it can be clamped solidly between the clamping shells (6) by compression of the clamping plates (5) toward one another ; a drive mechanism (14) for displacing the clamping shells (6), in their released condition, in two crossing directions, the drive mechanism (14) being equipped with measuring devices (17, 29), for electronically measuring a displacement range ; and an electronic control unit designed for calculating a measured displacement range and controlling the drive

9

mechanism (14) so as to precision-center the pilot shaft (11) exactly halfway between the end positions of two displacement directions of the pilot shaft (11), and then securing the pilot shaft (11) in this central position.

7. Device according to claim 6, wherein the drive mechanism (14) for each displacement direction comprises an electric motor (15, 15') whose drive shaft (16, 16') runs in the threaded hole of a ball (18, 18'), which ball (18, 18') is connected in an articulated manner with at least one of the clamping shells (6) by means of a connecting rod (19, 19'), the displacement range of the clamping shells (6) consisting of two swiveling ranges of the clamping shells (6) around two distinct swiveling axes (30, 31), the swiveling axis (31) for the first swiveling range being formed by an articulated connection of the connecting rod (19) of the drive mechanism (14) for a second swiveling range of the clamping shell (6), and the swiveling axis (30) for the second swiveling range being located on the swiveling arm (4) in a central position of the articulated connection (37) between connecting rod (19') of the drive mechanism (14) for the first swiveling range and the clamping shell (6).

8. Device according to claims 6 and 7, wherein the measuring devices for the swiveling range comprise, for each swiveling direction, two end switches for the two crossing directions of the connecting rods (19, 19'), and a rotational range meter mounted on the drive shaft (16, 16'), by means of which the rotational range can be electronically measured.

9. Device according to claim 8, wherein each of the end switches comprises a light barrier (27, 27') which is stationary relative to the swiveling arm (4) and perpendicular to the connecting rod (19, 19'), and a cam (33, 33') protruding radially from one of the connecting rods (19, 19') or from the threaded ball (18, 18') and which interrupts a photoelectrical beam, thus triggering a signal when crossing the light barrier (27, 27').

10. Device according to claim 8, wherein the rotational range meter on each of the drive shafts (16, 16') comprises a round incremental disk (17, 17') concentrically mounted on the drive shaft (16, 16'), which disk has regular perforations at a given radius from the center or notches in regular intervals on its circumference, which perforations or notches open and close a light barrier (29, 29') at a frequency proportional to the rotation speed of the incremental disk (17, 17').

# FIG. 1

FIG. 2

EP 0 300 959 B1

FIG. 3

# FIG. 4

EP 0 300 959 B1

# FIG. 5